# EUROPEAN PATENT APPLICATION

(11) **EP 1 576 996 A1**
(43) Date of publication of application: **21.09.2005**
(21) Application number: 04388021.0
(22) Date of filing: 18.03.2004
(51) Int. Cl.: B01D 29/23, B01D 29/90

(54) **A filter device**

(71) Applicant: HARDI INTERNATIONAL A/S, 2630 Taastrup (DK)
(72) Inventor: Melin, Jan, 2100 Copenhagen 0 (DK)
(74) Representative: Sundien, Thomas

(57) **Abstract**

A filter device (10), particularly for use with an agricultural sprayer, comprising a) a casing (15) having a cylindrical wall (14) defining a longitudinal axis (C) of said filter device (10) and having a first end (15'), a second end (15") opposite said first end (15'), a liquid inlet (20) formed near said first end (15') in said cylindrical wall (14), a first liquid outlet (30) formed near said second end (15") in said cylindrical wall (14) and a second liquid outlet (40) arranged at said second end (15"), b) a filter element (90) disposed within said casing (15) for filtering a part of said liquid, c) a tubular insert member (80) extending within said filter element (90) along said longitudinal axis (C), said filter device (10) being adapted to set up a helical flow of said liquid along with and around said longitudinal axis (C) between said tubular insert member (80) and said casing (15), said filter element (90) having a filtering medium (F) defining a generally cylindrical wall of said filter element (90), said filter element (90) having a first end (92) and a second end (94) and being open at said first end (92) to allow entry at said first end (92) of said liquid into the interior of said filter element (90), said second outlet (40) communicating with the interior of said filter element (90) for allowing discharge of an unfiltered part of said liquid. The filter element (90) has at least one projection (98) extending inwardly in relation to the contour of said cylindrical wall defined by said filtering medium (F), and the at least one projection (98) having a face (99) extending in the general direction between said first end (92) and said second end (94) of said filter element (90).

## Description

### BACKGROUND OF THE INVENTION

The present invention is related to a filter device as indicated in the introductory part of claim 1, adapted to be connected to piping or tubing for conveying liquid to the filter device and then from the filter device. The invention also relates to a filter element as defined in claim 15. One advantageous use of the filter device and filter element of the present invention is for the continuous filtering of a liquid to be distributed on a field, such as pesticides or fungicides, using a mobile agricultural sprayer. The filter device may, however, also find use within alternative areas of technology.

A related filter device is sold by Italian firm Arag and has an elongated casing with a hollow tubular filter element which filters liquid flowing through the filter device with a helical motion, i.e. with a combined axial and circular motion. During such a filtration process a layer of solid particles is build up gradually on the inside surface of the filter element, starting at the upper end thereof farthest away from the discharge stud. This filter device involves the problem that the filter element must be removed for cleaning at relatively short intervals.

### SUMMARY OF THE INVENTION

The aforementioned problem and additional problems are solved by the filter device of the present invention having a filter element F as defined in the characterizing part of claim 1. By this filter element including inwardly directed projections the build up of solid particles is delayed or reduced, solid particles being continuously removed and discharged from the filter device.

Preferably, the helical motion of the liquid is generated as stated in claim 2 or 4. The projections are preferably formed as stated in claims 7-10. With the arrangement defined in claims 13, 14 and 22 an efficient removal of solid particles from the filtering medium F is achieved.

### BRIEF DESCRIPTION OF THE DRAWINGS

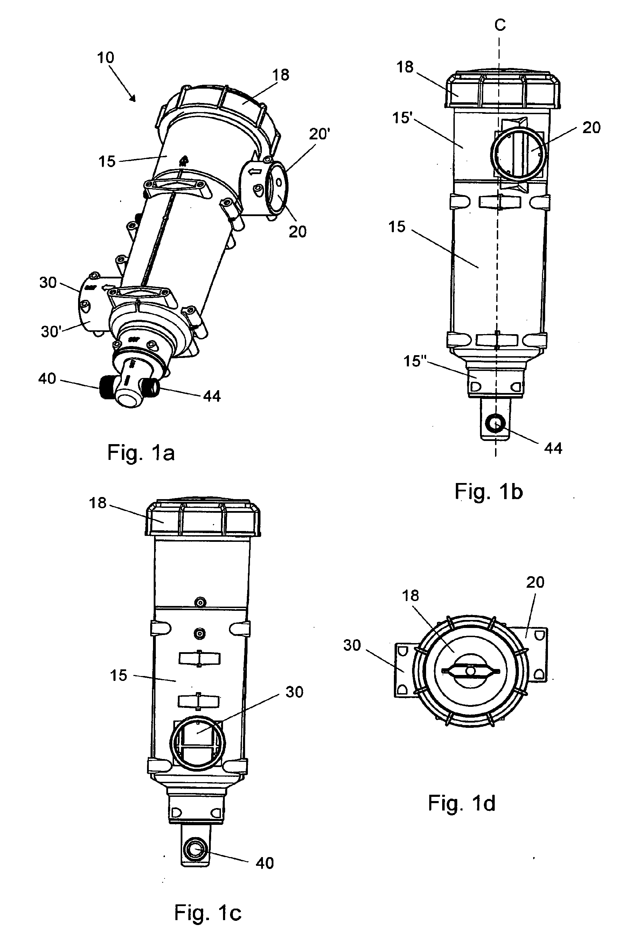

Preferred embodiments of the invention will be described in the following with reference to the drawing where
Fig. 1a is a perspective side view of a filter device according to the invention,
Fig. 1b is a side view of the filter device of fig. 1a,
Fig. 1c is a side view of the filter device as seen from the side opposite the one shown in fig. 1b,
Fig. 1 d is a top view of the filter device,
Fig. 2a is a perspective view of the various components of filter device of fig. 1a,
Fig. 2b is a cross-sectional view of the filter device of fig. 1a along axis C,
Fig. 3a is a perspective view of the upper part of the filter device in fig. 1a, with the casing being partially cut-away,
Fig. 3b is a view of the filter device seen from above with the casing being partially cut away,
Fig. 4a is a perspective view of a filter element for the filter device,
Fig. 4b shows the filter element of fig. 4a as seen from above, and
Fig. 4c shows an alternative filter element for the filter device.

Figs. 1a-1d show a filter device according to the invention generally designated reference numeral 10 and viewed from different sides. The filter device 10 is primarily but not exclusively intended for use on a ground travelling agricultural sprayer carrying a container or tank for a liquid, such as a fertilizer, a pesticide or a fungicide, a pump and spraying nozzles for distributing the liquid on a field. Such liquid usually contains finely divided solid matter that must be removed by filtering to prevent damage to the spraying nozzles.

In use, the filter device 10 is coupled by suitable tubing to the tank, and liquid delivered to the filter device is filtered by the filter device 10 and then delivered to the spraying nozzle(s).

The filter device 10 comprises a metal or plastics casing or receptacle 15 preferably having an essentially cylindrical wall portion that may be provided with brackets on the outside thereof for mounting the filter device 10 on the frame of the agricultural sprayer, this frame usually being the frame of a tractor or the frame of a trailer drawn by a tractor and carrying the tank for the liquid, the pump, and a spraying boom with the liquid nozzles for spreading the liquid on a field. In one embodiment of the invention the casing has a height of about 40 cm and a diameter of about 12 cm, a liquid flow of 200-400 I/min running through the filter device 10.

The casing 15 has a first end 15' and a second end 15", and the cylindrical wall of the casing 15 extends around the central longitudinal axis C of the filter device 10. The filter device 10 is preferably operated in a position essentially as shown in fig. 1 b, i.e. in a vertical position with the second end 15" facing directly downwards, although this need not be required for proper operation of the filter device 10.

The filter device 10 has a removable metal or plastics lid or cover 18 which is adapted to sealingly close the first end 15' of the casing 15 and which permits access to the interior of the casing 15 for service operation. Near each of the ends 15', 15", the casing 15 has a lateral opening defined by a stud or boss 20, 30 carrying a connecting piece 20', 30' by which the filter device 10 may be coupled to the main agricultural sprayer tubing. As shown in fig. 1 d stud 30 is preferably arranged such that liquid exits the device essentially radially with respect to the longitudinal central axis C while stud 20 is off-set to provide for a tangential entry of liquid into the device 10.

The stud 20 at the first end 15' is connected to the pump and to the tank holding the liquid to be filtered by the filtering device 10 while stud 30 is connected to tubing leading to the spraying nozzles. Opposite the lid 18, at the second end 15", is a further stud 40 with a connecting piece 40', for continuously returning a part of the liquid entering the filter device 10 to the tank by secondary tubing. A valve with an activation means 44 allows for a regulation of the amount of liquid returned to the tank through the stud 40. In the normal setting of the valve, a small part in the order of 10% is continuously returned to the tank.

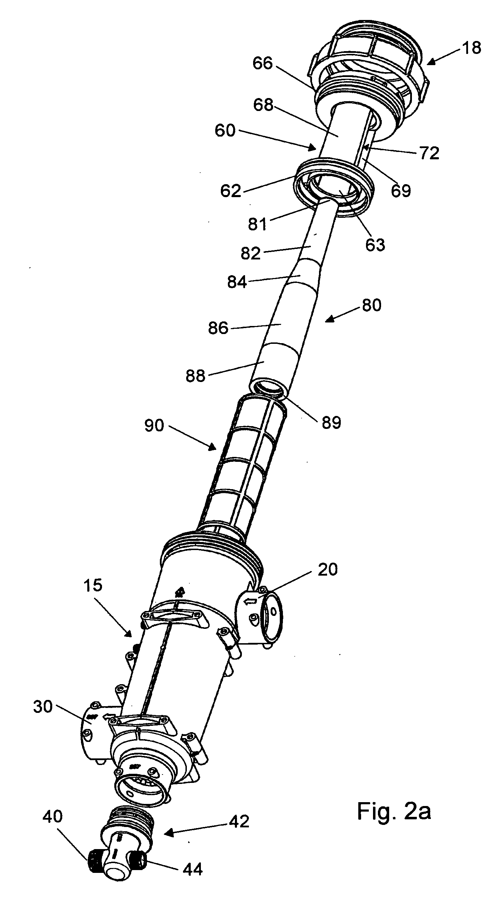

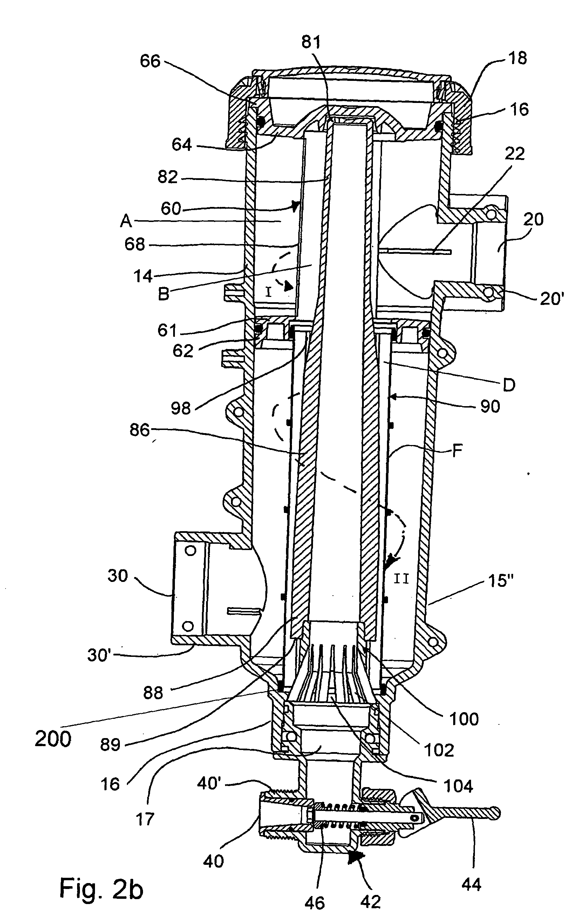

Figs. 2a and 2b show a suitable structure of the filter device 10 in greater detail with fig. 2a showing even more clearly some of the components of the filter device 10 prior to assembly. Internally, the filter device 10 has a filter element 90 supported at the lower end thereof by a an internal annular flange 200 of casing 15, a flow controlling device 60 directionally controlling the flow of the liquid, and a tubular insert 80 extending coaxially with the axis C and used for sustaining a desired circular flow of the liquid within the filter device 10. The casing 15 is formed with an aperture formed in a cylindrical extension 16 at the second end 15" in which an insert body 42 having the aforementioned stud 40 and valve 44 is placed. As mentioned above, suitable tubing is connected to the various studs 20, 30 and 40 by means of the connecting pieces 20', 30' and 40'.

The tubular insert 80 is a cylindrical body which may or may not be hollow and have an increasing outer diameter in a direction towards a second end 89 thereof closest to the second end 15" of the casing 15. The tubular insert 80 has a conical surface part 84 which forms the transition between a small diameter part 82 and a larger diameter part 86. A base member 100 within the casing 15 is adapted to support the tubular insert 80 and is provided with ribs 104 extending in the general direction of axis C and defining between each other elongated apertures 102 through which the aforementioned part of the liquid that is returned to the tank through stud 40 flows. As appears from fig. 2b, no liquid that has passed through the filter element 90 from the space between the filter element 90 and the tubular insert 80 is allowed to exit through stud 40. As shown in fig. 2b, when the lid 18 is in place the upper end 81 of the tubular insert 80 is received in and laterally supported by a recess formed in the upper plug member 64 of flow controlling device 60.

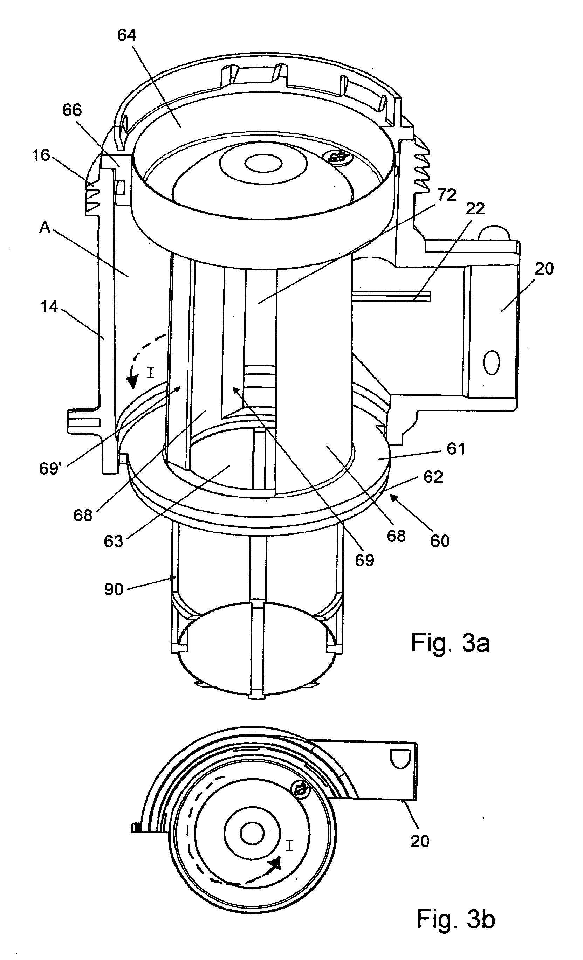

Fig. 3a shows a partially cut away portion of the casing 15 at the first end 15' with the flow controlling device 60 shown in greater detail. The device 60 is a removable cylindrical body defined by a wall 68 extending coaxially with the longitudinal axis C of the filter device 10 and connected to an upper plug member 64 with a packing that provides a seal against the upper rim of the casing 15 near an external thread 16 by which the lid 18 engages the casing 15. Opposite member 64 is an annular ring 61 connected to the wall 68 and also having a peripheral area 62 providing a seal against the inside of the casing 15. The ring 61 defines a central aperture 63 through which liquid entering the casing at stud 20 flows towards the second end 15" of the casing 15.

In operation, liquid entering the casing 15 through stud 20 initially follows the contour of the inside of the cylindrical wall 14 of casing 15, i.e. more or less tangentially, due to the off-set location of stud 20. As shown, the cylindrical wall 68 has a number of elongated ports 72, and the wall 68 has slanted guiding portions 69, 69' delimiting the ports 72 such that the liquid that flows in a circular manner along the inner periphery of the casing 15 is guided into the inside of the cylindrical body of the device 60, i.e. as shown schematically by pointed line I in fig. 3b, through the ports 72.

Turning to fig. 2b again, with the lid 18 sealing the casing 15 liquid entering the filtering device 10 at stud 20 first enters annular chamber A defined by the inside casing 15 and the outside of the flow controlling device 60 and then flows into annular central chamber B defined by the inside of wall 68 of the flow controlling device 60 and the outside of the tubular insert 80, i.e. as shown by the pointed line marked I. With a continued circular motion around the tubular insert 80 the liquid exits the central chamber B, flowing in the axial direction of the filter device 10 with a helical motion towards the discharge stud 30 of the filter device 10, i.e. as shown by the pointed line marked II. It is noted that the aforementioned conical part 84 is suitably arranged where the liquid leaves the central chamber B.

With this helical motion some of the liquid passes through the filter element 90 at the upper end thereof while some passes through the filter element 90 farther away from that end, i.e. closer to the second end 15" of the filter device 10. During this process, the liquid is filtered by a mesh-like filtering medium F of the filter element 90 to be discussed further below, with any solid particles in the liquid being retained by the filtering element 90.

During such a filtration process a layer of solid particles would normally be build up gradually on the inside surface of the filter element 90, starting at the upper end thereof farthest away from the discharge stud 30. According to the invention, by the provision of a specially designed filter element 90 the build up of solid particles is delayed or reduced, solid particles being continuously removed and discharged through the stud 40, as will be explained.

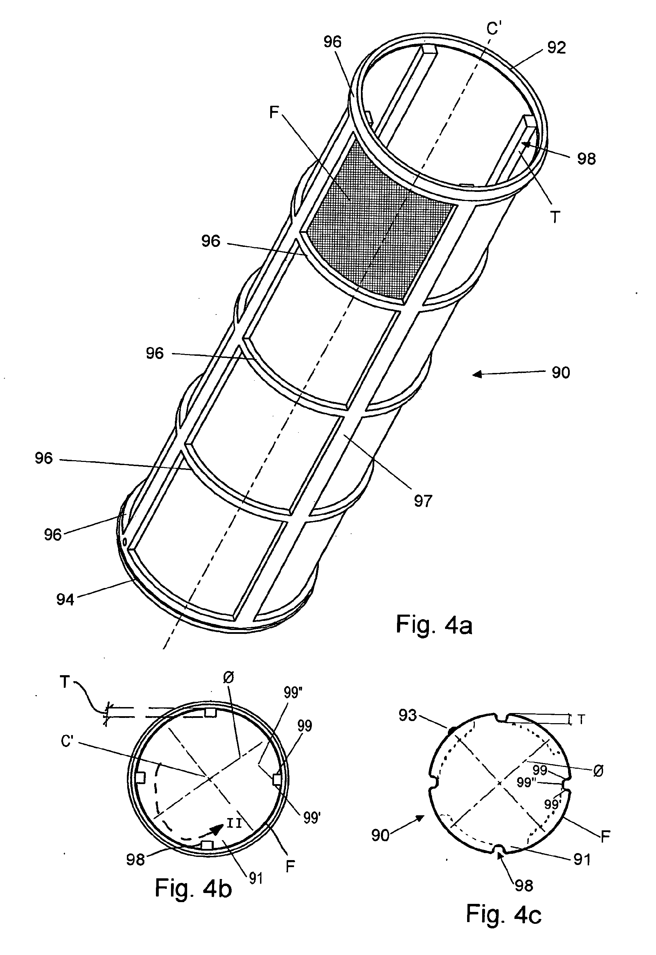

Figs. 4a and 4b show an embodiment of a filter element 90 according to the invention to be located within the casing 15 to provide for a filtering of the liquid. The filter element 90 has a generally cylindrical contour and has a plurality of annular ribs 96 molded integrally with number of ribs 97 extending in the direction of the longitudinal axis C' of the filter element 90 to provide a rigid support for a metal or plastics mesh-like filtering medium F (only shown schematically in an upper region of the filter element 90 for the sake of clarity) which spans the interspaces between all adjacent annular ribs 96 and all adjacent longitudinal ribs 97 and which defines an inner, generally right circular cylindrical contour of the filter element 90, as shown in fig. 4b. At the upper end 92 of the filter element 90, an uppermost annular rib 96 is adapted so as to seal against the lower surface of ring member 61 of device 60, and the annular rib 96 at the lower end 94 of the filter element 90 seals against the aforementioned internal supporting flange 200 of casing 15. Offset by 90° in the peripheral direction are inwardly projecting longitudinal projections 98 formed along selected ones the longitudinal ribs 97 and extending inwardly from the cylindrical contour defined by filtering medium F. In the shown embodiment each of the longitudinal ribs 97 is provided with a projection 98, and the projections 98 have parallel sides 99, 99' and a front side 99". Preferably, this filter element 90 is formed using, for the filtering medium F, a metal or plastics web which is rolled and arranged in a mold with plastics material being injected into the mold to form the ribs 97 and projections 98.

Preferably, the filter element 90 is connected at the upper end 92 to the ring member 61 by press-fit, and is releasably supported by flange 200. By forming the flow controlling device 60 as a unitary element, removal of lid 18 may allow the user to remove the filter element 90 and the flow-controlling device as a single piece for service, optionally leaving the tubular insert 80 behind in the casing. This provides the advantage that the user need not insert his fingers into the casing which may be filled with a potentially hazardous liquid.

Fig. 4c shows a cross-sectional view of an alternative embodiment of the filter element 90 for use in the filter device 10, the filter element 90 being a metal or plastics mesh F which is rolled to form a generally right circular cylinder and which includes indentations defining in this case four projections 98. The ends of the web of the metal or plastics mesh (F) are joined along area 93 extending along the axis C'.

In the embodiments shown herein, the extension T of side 99 from the inner surface of mesh (F) towards the longitudinal axis C' of the filter element 90 may be in the order of 3 mm with the inner diameter ⌀ of the filter element 90 measured at the inside surface of mesh (F) preferably being constant and being in the order of 50 mm. Preferably, in general the aforementioned extension T is selected such that the distance between the projections 98, i.e. at front 99", and the outside surface of the tubular insert 80 is at minimum 3%, preferably in the order of 3%-10% of the inside diameter ⌀ of the filter element 90.

As mentioned, during use of the filter device 10, liquid flows in a helical manner within the casing 15, with solid particles beginning to build up a clogging layer on the inside of filtering medium F. In fig. 4b pointed line II shows schematically the flow of liquid flowing within the filter element 90. While the applicant does not wish to be bound by any specific theory it is believed that the provision of the projections 98 in combination with the circular flow gives rise to turbulence in area 91 adjacent the rear side 99 (in relation to the direction of flow of the liquid) of the projections 98, and that this turbulence leads to a tendency of the solid particles to be carried off the inside of the filtering medium F in those areas 91 and to remain suspended in the liquid as the liquid within the filter element 90 flows further towards the second end 15" of the filter device 10.

As a consequence, the liquid flowing within the filter element 90 and reaching the area of the filter device 10 near the second end 15" is generally heavily charged with solid particles, and this part of the liquid entering the filter device 10 is then discharged through the port 40 as described above, and returned to the tank or diverted to any suitable collecting device. The tank or the collecting device may then be cleaned when desired; however, this needs be done at much larger intervals than required when using conventional filter devices.

It is noted that the valve 44 permits the user to allow for a higher part, such as 20%-30%, of the liquid to be temporarily discharged through port 40, such as after a period of prolonged use of the device 10, when an unclogging of the filter medium F is required. Rather than removing the filter element 90 the user would open valve 44 to provide for a more intense flow of liquid in the axial direction C of the device 10, the flow being primarily in the annular area D delimited by the tubular insert 80 and the filter element 90, and with the peripherally directed flow being less intense, solid particles clogging the filter medium F will tend to be carried off the filter medium F with the liquid flowing towards port 40.

As shown schematically by the dotted line in fig. 4c the at least one projection (98) may alternatively extend helically around said axis (C) by less than 90°, or alternatively by more than 90°.

## Claims

1. A filter device (10), particularly for use with an agricultural sprayer, comprising
a) a casing (15) having a cylindrical wall (14) defining a longitudinal axis (C) of said filter device (10) and having
- a first end (15'),
- a second end (15") opposite said first end (15'),
- a liquid inlet (20) formed near said first end (15') in said cylindrical wall (14),
- a first liquid outlet (30) formed near said second end (15") in said cylindrical wall (14) and
- a second liquid outlet (40) arranged at said second end (15"),
b) a filter element (90) disposed within said casing (15) for filtering a part of said liquid,
c) a tubular insert member (80) extending within said filter element (90) along said longitudinal axis (C),
said filter device (10) being adapted to set up a helical flow of said liquid along with and around said longitudinal axis (C) between said tubular insert member (80) and said casing (15),
said filter element (90) having a filtering medium (F) defining a generally cylindrical wall of said filter element (90), said filter element (90) having a first end (92) and a second end (94) and being open at said first end (92) to allow entry at said first end (92) of said liquid into the interior of said filter element (90),
said second outlet (40) communicating with the interior of said filter element (90) for allowing discharge of an unfiltered part of said liquid,
**characterised in**
said filter element (90) having at least one projection (98) extending inwardly in relation to the contour of said cylindrical wall defined by said filtering medium (F),
said at least one projection (98) having a face (99) extending in the general direction between said first end (92) and said second end (94) of said filter element (90).

2. A filter device according to any of the preceding claims, said liquid inlet (30) being arranged to provide a tangential flow into said casing (15) of said liquid in relation to said cylindrical wall (14) of said casing (15).

3. A filter device according to claim 1 or 2, including means (60) for generating a flow of said liquid around said longitudinal axis (C), said means (60) being arranged within said casing (15) adjacent said liquid inlet (20).

4. A filter device according to the preceding claim, said means (60) for generating said flow including a cylindrical wall (68) extending along said longitudinal axis and having at least one port (72) for said liquid, said wall (68) having an outer surface defining together with said casing (15) a first chamber (A) and said wall (68) having an inner surface defining together with said tubular insert body (80) a second chamber (B), said second chamber B communicating with the inside of said filter element (90) at said open end (92).

5. A filter device according to the preceding claim, said wall (68) including slanted edges (69, 69') delimiting said ports (72) for guiding said liquid into said second chamber (B).

6. A filter device according to any of the preceding claims, said second outlet (40) including a valve (44) for allowing a variable discharge of said liquid through said second outlet (40).

7. A filter device according to any of the preceding claims, said at least one projection (98) extending parallel with said axis (C).

8. A filter device according to any of claims 1-6, said at least one projection (98) extending helically around said axis (C).

9. A filter device according to any of the preceding claims, said at least one projection (98) including essentially parallel faces (99, 99').

10. A filter device according to any of the preceding claims, said at least one projection (98) extending continuously between said first and second ends (92, 94) of said filter element (90).

11. A filter device according to any of the preceding claims, said filter element (90) including a plurality of annular ribs (96) molded integrally with a number of longitudinally extending ribs (97) to provide a rigid support for said filtering medium (F), said filtering medium (F) being a metal or plastics mesh-like filtering medium (F) spanning the interspaces between adjacent annular ribs (96) and adjacent longitudinal ribs (97), said projections (98) being molded integrally with said longitudinally extending ribs (97).

12. A filter device according to any of the preceding claims 1-10, said filter element (90) being a metal or plastics mesh rolled to define said cylindrical wall and including indentations defining said projections (98).

13. A filter device according to any of the preceding claims, said tubular insert member (80) and said filter element (90) extending coaxially with said axis (C) and defining an annular space (D) there between, said annular space (D) having a radial width at said projections (98), said radial width being at least 3%, and preferably in the order of 3%-10%, of the inside diameter ⌀ of said filter element (90).

14. A filter device according to any of the preceding claims, the inward extension (T) of said projections (98) being selected such that the annular space (D) between the inside surface of said filtering medium (F) and the outside surface of said tubular insert (80) is at minimum 3%, preferably in the order of 3%-10%, of the inside diameter ⌀ of said filter element (90).

15. A filter element (90) having a filtering medium (F) defining a generally cylindrical wall of said filter element (90), said filter element (90) having a first open end (92) and a second open end (94), **characterised in** said filter element (90) having at least one projection (98) extending inwardly from said cylindrical wall defined by said filtering medium (F), said at least one projection (98) having a face (99) extending in the direction between said first end (92) and said second end (94) of said filter element (90).

16. A filter element according to the preceding claim, said at least one projection (98) extending parallel with the longitudinal axis (C') between said ends (92, 94) of said filter element (90).

17. A filter element according to claim 15, said at least one projection (98) extending helically around the longitudinal axis (C') between said ends (92, 94) of said filter element (90).

18. A filter element according to any of the preceding claims 15-17, said at least one projection (98) including essentially parallel faces (99, 99').

19. A filter element according to any of the preceding claims 15-18, said at least one projection (98) extending substantially continuously or continuously between said first and second ends (92, 94) of said filter element (90).

20. A filter element according to any of the preceding claims 15-19, said filter element (90) including a plurality of annular ribs (96) molded integrally with number of longitudinally extending ribs (97) to provide an essentially rigid support for said filtering medium (F), said filtering medium (F) being a metal or plastics mesh-like filtering medium (F) spanning the interspaces between adjacent annular ribs (96) and adjacent longitudinal ribs (97), said projections (98) being molded integrally with said longitudinally extending ribs (97).

21. A filter element according to any of the preceding claims 15-19, said filter element (90) being a metal or plastics mesh rolled to define said cylindrical wall and including indentations defining said projections (98).

22. A filter element according to any of the preceding claims 15-21, the extension (T) of said projections (98) being at maximum 10%, preferably in the order of 3%-10%, of the inside diameter ⌀ of said filter element (90).
